# EUROPÄISCHE PATENTANMELDUNG

(11) **EP 1 657 792 A2**
(43) Veröffentlichungstag der Anmeldung: **17.05.2006**
(21) Anmeldenummer: 05020487.4
(22) Anmeldetag: 20.09.2005
(51) Int. Cl.: H01R 25/00, H02G 11/02, H01R 13/72

(54) **Steckdosenanordnung**

(30) Priorität: 15.11.2004 DE 202004017663 U
(71) Anmelder: Heinrich Kopp GmbH, 63796 Kahl am Main (DE)
(72) Erfinder: Fleckenstein, Hans-Jürgen, 63776 Mömbris (DE); Wagner, Matthias, 63829 Krombach (DE)
(74) Vertreter: Reinhard - Skuhra - Weise & Partner

(57) **Zusammenfassung**

Die vorliegende Erfindung schafft eine Steckdosenanordnung, bei der mit geringen zusätzlichen Maßnahmen eine zuverlässige Aufnahme der Zuleitung erreicht werden kann. Hierzu besteht die Steckdosenanordnung aus einem Steckdosengehäuse 10 mit mindestens zwei Steckdosen 14 sowie einer elektrischen Zuleitung 15 zu den Steckdosen 14, und aus einem Halter 20 für das Steckdosengehäuse 10, um den die Zuleitung 15 wickelbar ist.

## Beschreibung

Die Erfindung betrifft eine Steckdosenanordnung, insbesondere eine Tisch- und/oder Wandsteckdosenanordnung, bestehend aus einem Steckdosengehäuse mit mindestens zwei Steckdosen sowie einer elektrischen Zuleitung zu den Steckdosen.

Derartige Steckdosenanordnungen sind mit unterschiedlichen Längen der Zuleitung im Handel. Falls die Zuleitungen zu lang sind, können sie üblicherweise um das Steckdosengehäuse lose gewickelt werden, was jedoch keine zuverlässige Aufbewahrung der Zuleitung sicherstellt.

Darüber hinaus gibt es auch bereits Tischdeckdosen mit einem doppelwandigen Gehäuse, bei den überschüssige Zuleitungsabschnitte in den Zwischenraum zwischen den Gehäusewänden eingefädelt werden kann. Dies ist in der Praxis außerordentlich mühsam, und es besteht daher ein Bedürfnis nach Schaffung einer Steckdosenanordnung der eingangs genannten Art, bei der mit geringen zusätzlichen Maßnahmen eine zuverlässige Aufnahme der Zuleitung erreicht werden kann.

Erfindungsgemäß wird dieses Bedürfnis dadurch gestillt, dass die aus einem Steckdosengehäuse mit mindestens zwei Steckdosen sowie einer elektrischen Zuleitung zu den Steckdosen bestehende Steckdosenanordnung einen Halter für das Steckdosengehäuse aufweist, um den die Zuleitung wickelbar ist.

Gemäß einer bevorzugten Ausgestaltung der Erfindung ist zudem vorgesehen, dass das Steckdosengehäuse wenigstens teilweise lösbar in dem Halter aufnehmbar ist, wobei bevorzugt der Halter und das Steckdosengehäuse wechselseitig lösbare Rastorgange, wie beispielsweise Bajonettverschluss oder Rasthaken, aufweisen oder das Steckdosengehäuse in den Halter einschraubbar ist oder das Steckdosengehäuse mit Klemmsitz in den Halter aufnehmbar ist. Hierdurch wird vorteilhaft eine Trennbarkeit erreicht, die es ermöglichst, den Halter an einem Körper, beispielsweise einer Wand oder einem Leerroller zu befestigen, wobei dann in einer derartigen Befestigungssituation ein Raum zur Aufnahme mindestens eines Teils der Zuleitung geschaffen ist. Gleichzeitig kann vorteilhaft das Steckdosengehäuse mit einer Zuleitung auch von dem Halter in einfacher Weise gelöst und separat verwendet werden, beispielsweise als Tischsteckdose. Vorteilhaft kann dabei das Steckdosengehäuse ohne Zuhilfenahme eines Hilfsmittels mit dem Halter verbunden oder gelöst werden, was ein Betreiben der Steckdosen und des Steckdosengehäuses in flexibler Weise mit oder ohne Halter ermöglicht. Es ist auch denkbar, einen Teil der Zuleitung auf dem Halter zu belassen und nur eine benötigte Länge der Zuleitung abzuwickeln.

Nach einer bevorzugten Ausgestaltung der Erfindung weist der Halter Führungselemente für das Aufwickeln der Zuleitung auf, welche bevorzugt als Laschen ausgebildet sind, welche sich seitlich vom Halter weg erstrecken.

Von Vorteil für die Sicherung des Endes der aufgewickelten Zuleitung ist es zudem, wenn wenigstens eine der Laschen Steckereinsetzöffnungen für den Zuleitungsendseitigen Stecker aufweist.

Nach einer vorteilhaften weiteren Ausgestaltung der Erfindung weist der Halter Befestigungsmittel zur Befestigung an einer Wand oder einem Leerroller auf, welche vorzugsweise an bzw. in einem Bodenabschnitt, insbesondere mit Löchern gebildet sind.

Alternativ oder gleichzeitig kann die Unterseite des Bodenabschnitts auch Auflagepolster für den Einsatz der Steckdosenanordnung als mobile Tischsteckdosenanordnung aufweisen.

Der Halter kann in verschiedener körperlicher Gestaltung ausgeführt sein. Vorzugsweise ist er topfähnlich mit einem Querschnitt gebildet, wobei die äußere runde Form des Halters einen Rollenkörper bildet, der das optimale Wickeln von Zuleitungen ermöglicht. Die zuvor erwähnten seitlichen Laschen tragen dabei in vorteilhafter Weise dazu bei, dass die gewickelte Zuleitung nicht von dem Halter abrutscht.

Zur Erleichterung des Einsetzens und des Herausnehmens des Steckergehäuses in den bzw. aus dem Halter ist nach einer vorteilhaften Ausgestaltung der Erfindung vorgesehen, dass das Steckergehäuse außenseitige Griffanformungen aufweist.

Darüber hinaus kann nach einer weiteren Ausgestaltung der Erfindung vorgesehen sein, dass in dem Steckergehäuse selbst ein Aufnahmebereich für wenigstens einen Teil der Zuleitung gebildet ist.

Weitere Einzelheiten, Merkmale und Vorteile der Erfindung sind im nachfolgenden Beschreibungsteil zu entnehmen, in dem ein Ausführungsbeispiel der Erfindung unter Bezugnahme auf die beigefügten Zeichnungen näher erläutert wird. Es zeigen:
- Figur 1: eine perspektivische Darstellung eines Steckdosengehäuses mit vier Steckdosen und einer elektrischen Zuleitung nebst Netzstecker;
- Figur 2: eine perspektivische Draufsicht auf einen Halter gemäß der Erfindung; und
- Figur 3: eine perspektivische Draufsicht der Steckdosenanordnung, bei der das Steckdosengehäuse gemäß Figur 1 in den Halter gemäß Figur 2 eingesetzt ist.

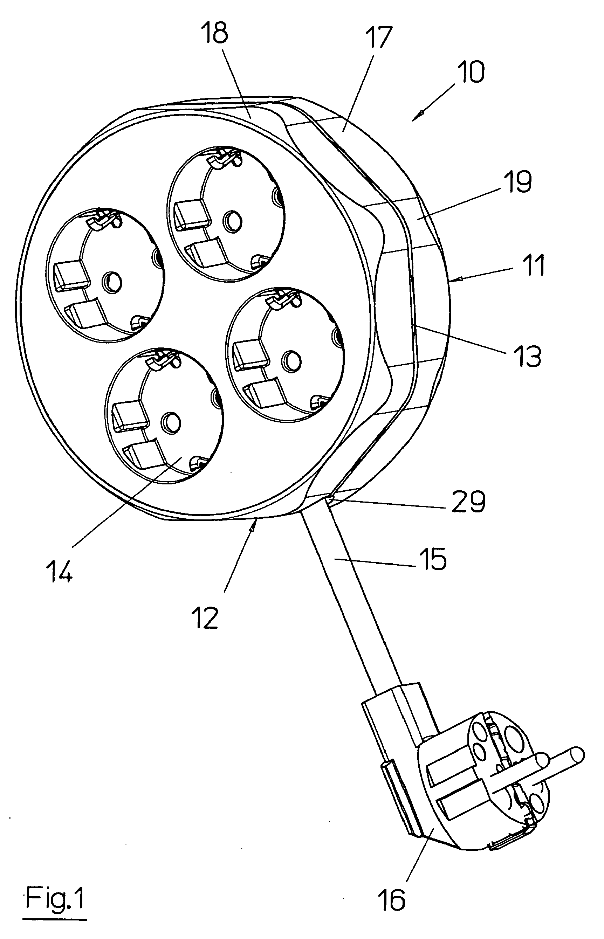

In Figur 1 ist ein Ausführungsbeispiel eines Steckdosengehäuses 10 dargestellt. Das Steckdosengehäuse 10 besteht aus einem im Querschnitt runden unterem Gehäuseabschnitt 11 und einem ebenfalls runden oberen Gehäuseabschnitt 12. Der untere Gehäuseabschnitt 11 besitzt einen geschlossenen Boden und ist in nicht dargestellter Weise mit dem oberen Gehäuseabschnitt 12 an einer Trennkante 13 wechselseitig anliegend verbunden. Der obere Gehäuseabschnitt 12 enthält vier Steckdosen 14, die in der oberen Abdeckung des oberen Abschnitts 12 eingeformt sind und rückseitig in Verbindung mit einer Zuleitung 15 verbunden ist, der aus dem Steckdosengehäuse 10 heraustritt und endseitig einen Netzstecker 16 besitzt. In dem Innenraum zwischen dem oberen Abschnitt 12 und dem unteren Abschnitt 11 befindet sich ein nicht dargestellter Aufnahmebereich, in dem ein Teil der Zuleitung 15 aufnehmbar ist.

Das Steckdosengehäuse 10 besitzt an seinem runden Außenumfang Griffeinformungen 17, die zwischen zwei Anformungen 18 und 19 gebildet sind, welche über den runden Rand des oberen und unteren Gehäuseabschnitts 11 bzw. 12 radial vorstehen. In Figur 1 sind insgesamt fünf Griffeinformungen 17 gezeigt, die sich nicht vollständig, sondern nur über einen überwiegenden Teil des Umfangs des Steckdosengehäuses 10 erstrecken.

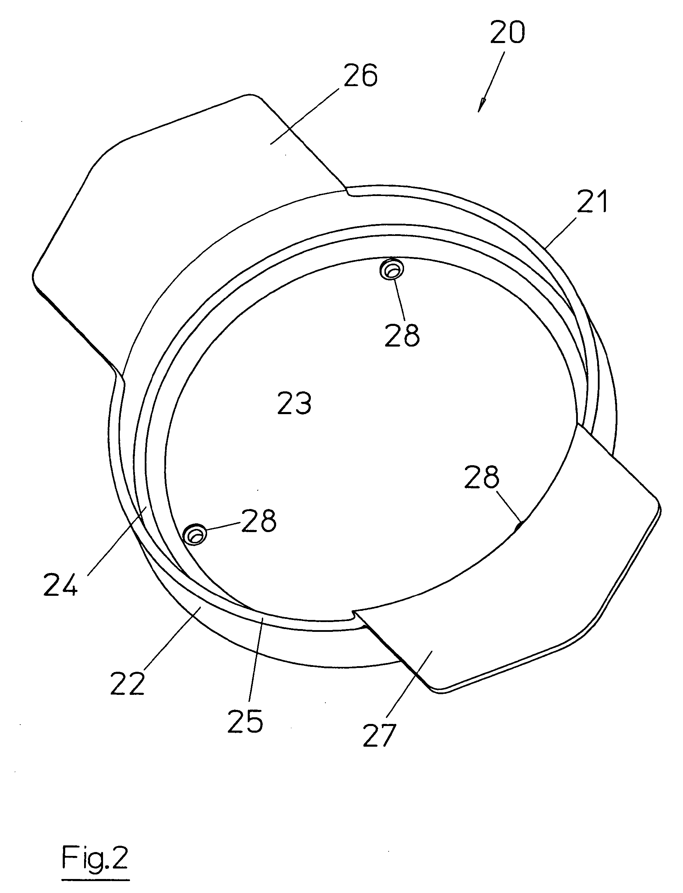

In Figur 2 ist ein Ausführungsbeispiel eines Halters 20 in perspektivischer Draufsicht dargestellt. Der Halter 20 besteht aus einem topfähnlichen Körper 21 mit einem runden Querschnitt, dessen Innendurchmesser auf den Außendurchmesser bzw. die maximale radiale Ausdehnung des Steckdosengehäuses 10 so abgestimmt ist, dass der untere Abschnitt 11 des Steckdosengehäuses 10 in den Halter 20 lösbar aufgenommen werden kann.

Der Halter 20 besitzt eine umlaufende Wand 22 und einen runden Boden 23, wobei an der Innenseite der Wand 22 eine Auflagewand 24 gebildet ist, die sich von dem Boden 23 etwa zu einem Drittel der Höhe der Wand 22 erstreckt und als Auflagefläche für das eingesetzte Steckdosengehäuse 10 fungiert.

Die umlaufende Wand 22 endet an ihrer Oberseite in einem Rand 25, an den zwei gegenüberliegende erhaben angeformte Laschen 26 und 27 vorgesehen sind. Diese auf dem oberen Rand 25 aufgesetzte und sich seitlich erstreckenden Laschen 26 und 27 dienen als Führungselemente für das Aufwickeln einer Zuleitung, wobei sie vorteilhaft dann, wenn der Halter 20 mittels Durchschnittslöcher 28 im Boden 23 tretenden Befestigungsmittel an einer Wand oder dergleichen befestigt ist, einen sicheren Aufwickelraum zwischen sich und der Wand bilden.

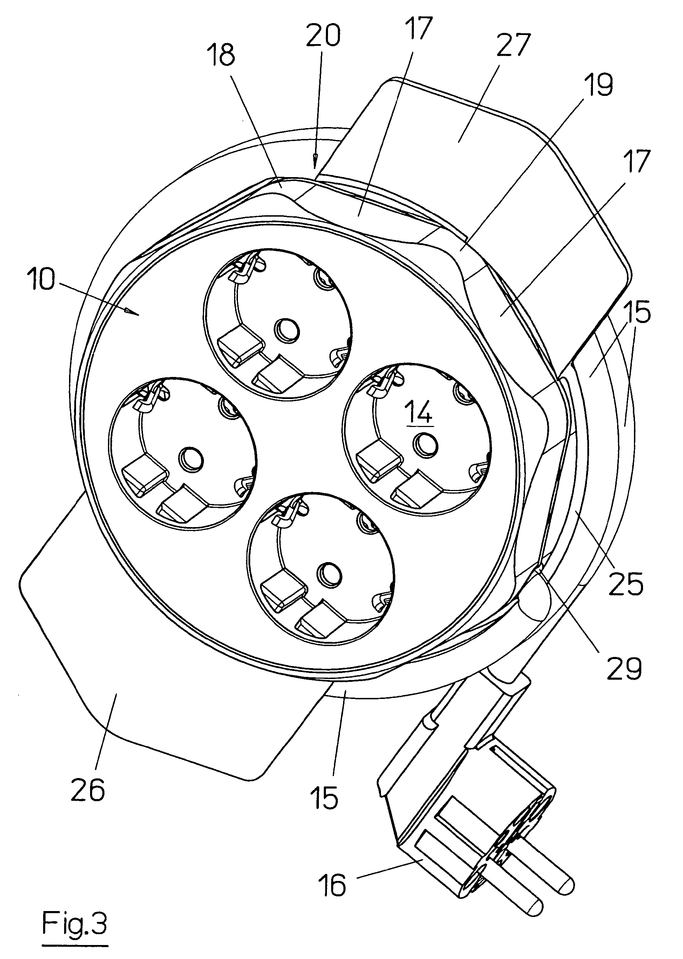

Die Figur 3 zeigt in einer perspektivischen Draufsicht die vollständige Steckdosenanordnung, bei der das Steckdosengehäuse 10 in den Halter 20 derart eingesetzt ist, dass die Gehäusetrennlinie 13 mit dem Durchlass 29 für die Zuleitung 15 noch oberhalb der Oberseite des Rands 25 liegt. In dieser Stellung ist die Unterseite des Steckdosengehäuses 11 auf der Auflagefläche 24 des Halters 20 angeordnet.

Entnehmbar ist Figur 3 weiterhin, wie die Zuleitung 15 um das äußere des Halters 20 gewickelt ist.

Zur Verwendung des Steckdosengehäuses 10 mit den Steckdosen 14 kann entweder die gesamte Steckdosenanordnung als Tischsteckdose eingesetzt werden oder auch das Steckdosengehäuse 10 dem Halter 20 entnommen und unabhängig davon verwendet werden. Es ist zudem auch möglich, einen Teil der Zuleitung 15 auf dem Halter aufgewickelt zu belassen, während das Steckdosengehäuse 10 mit einigen abgewickelten Zuleitungswindungen aus dem Halter 20 entnommen und separat von diesem verwendet wird.

## Patentansprüche

1. Steckdosenanordnung, bestehend aus
einem Steckdosengehäuse (10) mit mindestens zwei Steckdosen (14) sowie einer elektrischen Zuleitung (15) zu den Steckdosen (14), und aus
einem Halter (20) für das Steckdosengehäuse (10), um den die Zuleitung (15) wickelbar ist.

2. Anordnung nach Anspruch 1, **dadurch gekennzeichnet, dass** das Steckdosengehäuse (10) in dem Halter (20) lösbar aufnehmbar ist.

3. Anordnung nach Anspruch 2, **dadurch gekennzeichnet, dass** der Halter (20) und das Steckdosengehäuse (10) wechselseitige lösbare Rastorgane aufweisen.

4. Anordnung nach Anspruch 2, **dadurch gekennzeichnet, dass** das Steckdosengehäuse (10) in den Halter (20) einschraubbar ist.

5. Anordnung nach Anspruch 2, **dadurch gekennzeichnet, dass** das Steckdosengehäuse (10) mit Klemmsitz in den Halter (20) aufnehmbar ist.

6. Anordnung nach einem der vorangehenden Ansprüche, **dadurch gekennzeichnet, dass** der Halter (20) Führungselemente für das Aufwickeln der Zuleitung (15) aufweist.

7. Anordnung nach Anspruch 6, **dadurch gekennzeichnet, dass** die Führungselemente Laschen (26, 27) aufweisen, welche sich seitlich vom Halter (20) weg erstrecken.

8. Anordnung nach Anspruch 7, **dadurch gekennzeichnet, dass** wenigstens eine der Laschen (26, 27) Steckereinsetzöffnungen für einen zuleitungsendseitigen Stecker (16) aufweist.

9. Anordnung nach einem der vorangehenden Ansprüche, **dadurch gekennzeichnet, dass** der Halter (20) Befestigungsmittel zur Befestigung an einer Wand oder einem Leerroller besitzt.

10. Anordnung nach Anspruch 9, **dadurch gekennzeichnet, dass** die Befestigungsmittel in einem Bodenabschnitt (23) mit Löchern (28) gebildet sind.

11. Anordnung nach einem der vorangehenden Ansprüchen, **dadurch gekennzeichnet, dass** der Halter (20) einen Bodenabschnitt (23) aufweist, der an seiner Außenseite Auflagepolster besitzt.

12. Anordnung nach einem der vorangehenden Ansprüchen, **dadurch gekennzeichnet, dass** der Halter (20) topfähnlich mit einem runden Querschnitt gebildet ist.

13. Anordnung nach einem der vorangehenden Ansprüchen, **dadurch gekennzeichnet, dass** der Halter (20) eine Auflagefläche (24) für das Steckergehäuse (10) aufweist.

14. Anordnung nach einem der vorangehenden Ansprüchen, **dadurch gekennzeichnet, dass** das Steckergehäuse (10) außenseitige Griffanformungen (17-19) aufweist.

15. Anordnung nach einem der vorangehenden Ansprüchen, **dadurch gekennzeichnet, dass** in dem Steckergehäuse (10) ein Aufnahmebereich für die Zuleitung (15) gebildet ist.
